# EUROPÄISCHE PATENTSCHRIFT

(11) **EP 1 174 373 B1**
(45) Veröffentlichungstag und Bekanntmachung des Hinweises auf die Patenterteilung: **18.08.2004**
(21) Anmeldenummer: 01111597.9
(22) Anmeldetag: 12.05.2001
(51) Int. Cl.: B65G 39/02, B65G 1/02

(54) **Rolle, inbesondere Kunststoffrolle**
Roll,especially plastic roll
Rouleau,en particulier rouleau en plastique

(30) Priorität: 20.07.2000 DE 20012578 U
(43) Veröffentlichungstag der Anmeldung: 23.01.2002
(73) Patentinhaber: Fritz Schäfer Gesellschaft mit beschränkter Haftung, D-57290 Neunkirchen (DE)
(72) Erfinder: Schäfer, Gerhard, 57290 Neunkirchen (DE)
(74) Vertreter: Valentin, Ekkehard

(56) Entgegenhaltungen:
- DE-U- 20 012 578
- DE-U- 29 921 170
- FR-A- 2 199 521
- FR-A- 2 681 583
- GB-A- 1 455 214
- US-A- 4 802 519

## Beschreibung

Die Erfindung betrifft eine Rolle, insbesondere aus Kunststoff, die in einer Achsaufnahme eine Achse aufweist, deren Achsenden in Rollenbahnleisten lagern und mit einer umlaufenden Nut ausgebildet ist, der an der Innenfläche der Achsaufnahme ein komplementäres Feder-Rastmittel zugeordnet ist, wie durch die FR-A-2 199 521 bekanntgeworden.

Derartige Rollenleisten bzw. Rollenbahnleisten kommen üblicherweise in Durchlaufregalen für mit Waren beladene Behälter, z.B. Lager- und/oder Transportkästen oder Kartons, zum Einsatz. Das Regal besitzt üblich in mehreren Etagen übereinander sowie in jeder Etage zu mehreren nebeneinander angeordnete, geneigte Laufbahnen für die Behälter. Jede Laufbahn besteht aus Rollenbahnleisten, die im Abstand und in einer Reihe hintereinander frei drehbare Röllchen. bzw Rollen besitzen, die meist als Zylinderrolle oder als Spurkranzrolle ausgebildet sind und üblich in einem meist verzinkten Stahlblechprofil lagern. Die Rollen - aus Stahl, vorzugsweise aus Kunststoff - sind den jeweiligen Belastungsfällen angepaßt und dienen als Stütz- und Führungselemente für die Behälter bzw. Kästen.

Um den auftretenden Belastungsfällen entsprechen zu können, kommen Rollen aus Kunststoff mit durchgeführter Stahlachse, wie durch das DE 299 21 170 U1 bekanntgeworden, Vollkunststoffrollen sowie bei sehr hohen Belastungen Stahlrollen zur Anwendung. Den häufigsten Einsatz verzeichnen hierbei Kunststoffrollen mit einer Stahlachse, die lose oder fest in der Rolle sitzen kann. Bei der lose in die Rolle eingesetzten Stahlachse - die Rolle dreht sich in diesem Fall um die Achsenutzt man den Vorteil der nur gering auftretenden Gleitwiderstände zwischen Kunststoff und Stahl, um eine verbesserte Laufeigenschaft der Rolle zu gewährleisten. Demgegenüber weist die fest in einer Kunststoffrolle sitzende Stahlachse höhere Gleitwiderstände auf, da sich die Achszapfen in den meist aus verzinktem Stahlblech bestehenden Achslagern der Rollenbahnleisten drehen.

Die Rollen mit losen Achsen werden zur Arretierung der Achszapfen manuell- oder maschinell in ein Profil der Rollenbahnleiste eingesetzt. Hierbei kann die Achse verrutschen oder sogar ganz herausfallen, wodurch eine erhebliche Beeinträchtigung beim Bestücken der Rollenbahnleisten auftritt, insbesondere bei der maschinellen Bestückung, da die fehlenden Achsen von Hand nachgerüstet und dann montiert werden müssen. Eine kostengünstige Vormontage der Rollen mit Achse ist weitestgehend ausgeschlossen, da die Rollen sich nicht für eine Lagerhaltung eignen; in der allgemein üblichen Lagerhaltung werden die hierbei verwendeten Mengen als Schüttgut betrachtet und gehandhabt, wobei die Achse zwangsläufig unkontrolliert herausrutschen würde.

Diesen Nachteilen ist nur entgegenzuwirken, wenn die Achse bewegungssicher eingepreßt oder innerhalb der Rolle mit Kunststoff umspritzt würde. Daraus ergeben sich allerdings - wie eingangs erläutert - wieder feste Verbindungen der Rolle mit der Stahlachse, wodurch die besseren Laufeigenschaften der Kunststoffrolle auf der losen Stahlachse nicht realisierbar sind.

Der Erfindung liegt daher die Aufgabe zugrunde, eine Rolle der eingangs genannten Art zu schaffen, die bei gewünscht guten Laufeigenschaften einen sicheren Halt der Achse in der Rolle gewährleistet und gleichwohl einfach zu montieren ist.

Diese Aufgabe wird erfindungsgemäß dadurch gelöst, dass die Feder in Federteilabschnitte unterteilt ist. Hierdurch lässt sich aufgrund der federfreien Bereiche zwischen den Federteilabschnitten die Elastizität gegenüber einer geschlossen umlaufenden Feder steigern. Dies ermöglicht eine noch bessere Anpassung der Einrastkraft, einhergehend mit einer erhöhten Dehnungsfestigkeit der Federteilabschnitte, bei der rastenden Verbindung mit der Achsnut sowie eine höhere Fügefestigkeit der Rastverbindung, insbesondere bei einer unter Belastung stehenden Rollen-/Achseinheit.

Wenn vorteilhaft die Achse in ihrer Mitte mit einer umlaufenden Nut ausgebildet ist, der an der Innenfläche der Achsaufnahme das komplementäre Feder-Rastmittel zugeordnet ist, läßt sich in einfacher Weise eine Rastverbindung zwischen der Achsaufnahme der Kunststoffrolle und der losen, vorzugsweise aus Stahl bestehenden Achse schaffen, welche die Achse auszugssicher, aber dabei dennoch weiterhin drehbar arretiert, ohne die Laufeigenschaften einzuschränken. Ein weiterer Vorteil der mittigen Rastverbindung besteht darin, daß die Klemmung bzw. Arretierung der Achse nur in einem eng begrenzten Bereich erfolgt, was dazu beiträgt, daß die Achsaufnahme durch den Einpreßdruck nicht einreißt.

Die Arretierung der Achse mittig in der Rolle begrenzt vorteilhaft das seitliche Spiel der Rolle, was den Geradeauslauf verbessert. Damit einhergehend tritt ein geringerer Verschleiß an den Seitenführungen der in einem Rollenbahnprofil laufenden Rolle auf. Des weiteren ermöglicht die Arretierung nunmehr eine Vormontage der Rolle mit der Achse, was sich insbesondere kostensenkend auf die Lagerhaltung, den Versand und das Handling der Rollen-/Achseneinheit auswirkt.

Die mittige Anordnung der Achsverliersicherung, d.h. der Feder-Rastmittel in der Mitte - bezogen auf die Länge der Rolle - der von einem Kanal bzw. einer Durchgangsbohrung gebildeten Achsaufnahme, ermöglicht eine deutlich verbesserte Aufnahme und Weiterleitung der Rast- und Haltekräfte, weil sich die hier größte Materialsteifigkeit des Rollenkerns ausschöpfen läßt. Wenn vorteilhaft die Nutbreite der Achse paßgenau oder mit minimaler Toleranz den Außenabmessungen des Rastmittels entspricht, ermöglicht dies eine nur sehr geringe axiale Verschiebetoleranz der Achse, was insbesondere eine schnelle und störungsfreie automatische Bestückung der Rollenbahnleisten mit der Rollen-/Achseneinheit erlaubt.

Die erfindungsgemäße Arretierung ist nicht auf die Verwendung einer Stahlachse begrenzt, sondern vielmehr können auch andere Achsmaterialien eingesetzt werden, wie hochstabile, gleitfähige Kunststoffe. Hierbei kann für die in der Kunststoffrolle eingefügte Kunststoffachse allein durch Reduzierung der Nutbreite eine Klemmung erreicht werden, so daß dann die Rolle nicht um die Achse, sondern die Achse mit äquivalent geringen Gleitwiderständen in den metallischen Lagerschalen der Rollenbahnprofile dreht.

Ein Vorschlag der Erfindung sieht vor, daß im Anbindungsbereich zwischen der Feder bzw. den Federteilabschnitten und der Innenfläche der Achsaufnahme eine Anlaufschräge oder ein Radius ausgebildet ist. Somit läßt sich über eine entsprechende Anpassung der Neigung der Anlaufschräge bzw. der Abnahme oder der Zunahme des Radius die gewünschte Einstellung der Rastkraft variieren.

Weiterhin sieht eine Ausgestaltung der Erfindung vor, daß das Höhenmaß der umlaufenden Feder bzw. der Federteilabschnitte frei wählbar ist. Eine damit mögliche Veränderung der Eingriffstiefe in die Nut der Achse erlaubt einerseits eine Anpassung der Druckkräfte, mit der die Feder bzw. die Federteilabschnitte die Achse arretieren, und andererseits wird dadurch die Fügefestigkeit bzw. Haltekraft der Feder-/Nutverbindung beeinflußt. Sowohl die Ausbildung der Anlaufschräge bzw. des Radius als auch das veränderliche Höhenmaß der Feder respektive der Federteilabschnitte dienen insbesondere dazu, die auf die Achse wirkenden Haltekräfte zu variieren. Damit läßt sich erreichen, daß die Achse lediglich arretiert und nicht geklemmt wird, damit die Rolle auf der Achse frei drehbar ist.

Schließlich sieht eine Ausgestaltung der Erfindung vor, daß im Verbindungsbereich der Achsaufnahme mit dem Rollenkern umfangsverteilt Fenster eingebracht sind. Die kraftabsorbierenden Fenster bewirken eine höhere Dehnbarkeit des Kunststoffes und schaffen somit eine Entlastung, insbesondere der Achsaufnahme, beim Einfügen der Achse. Eine Variation der Fenstergröße, mit entsprechend höheren bzw. niedrigeren Elastizitätswerten des Kunststoffes, ermöglicht eine Anpassung der Dehnbarkeit der Achsaufnahme. Dadurch wird verhindert, daß beim Einfügen der Achse die Feder abschert.

Weitere Einzelheiten und Vorteile der Erfindung ergeben sich aus den Ansprüchen und der nachfolgenden Beschreibung von in den Zeichnungen dargestellten Ausführungsbeispielen der Erfindung. Es zeigen:
- Fig. 1: eine perspektivische Gesamtansicht einer Rolle, mit einem Teilbereichsausschnitt;
- Fig. 2: eine Rolle von einer Stirnseite her gesehen;
- Fig. 3: einen Teil-Längsschnitt der Rolle gemäß Fig. 2; und
- Fig. 4: eine Gesamtansicht einer Rollenachse.

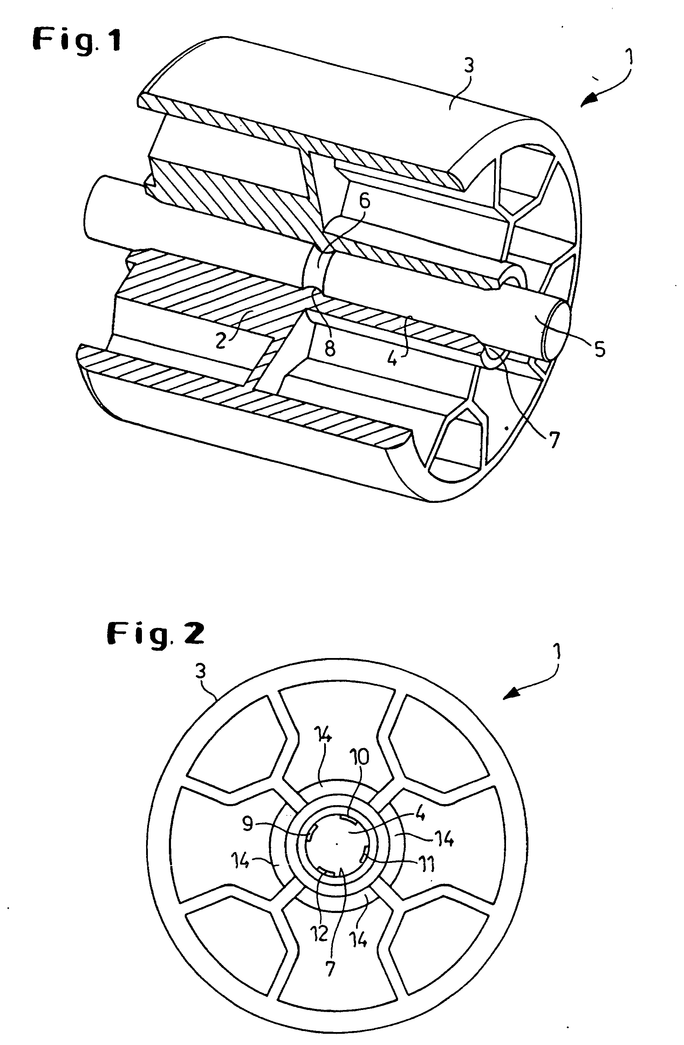

Eine in Fig. 1 gezeigte Rolle 1 gehört beispielsweise zu einer hier nicht dargestellten Rollenbahnleiste, die im Abstand und in einer Reihe zahlreiche hintereinander angeordnete, frei drehbare Rollen besitzt.

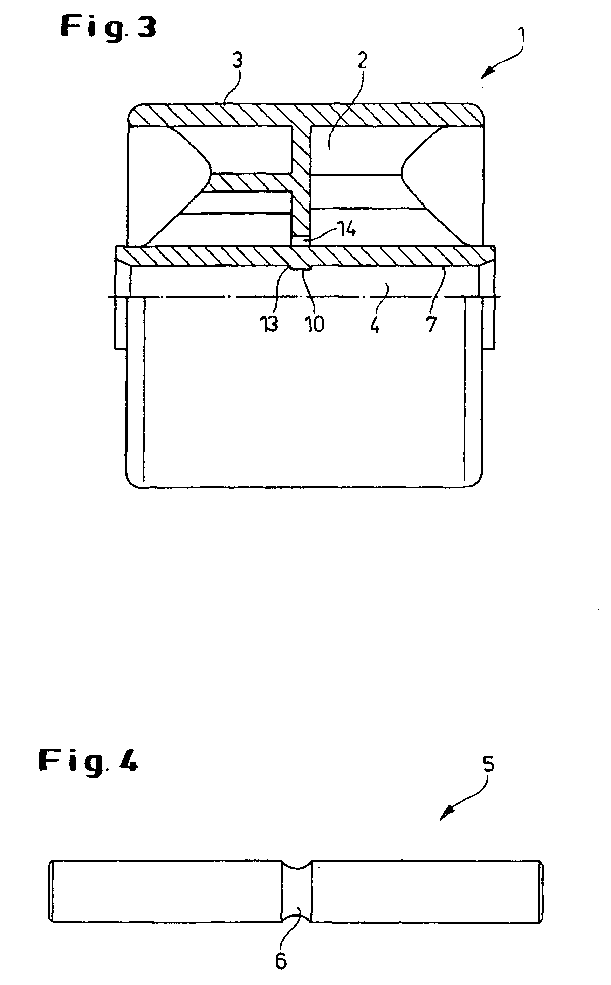

Die Rolle 1, vorzugsweise aus Kunststoff durch Spritzgießen hergestellt, weist einen Rollenkern 2 auf, der von einem Laufmantel 3 umschlossen ist. Der Rollenkern 2 ist mit einer hülsenartigen Achsaufnahme 4 ausgebildet, in die eine Stahlachse 5 eingesetzt wird (vgl. hierzu Fig. 4). Die Achse 5 ist in ihrer Mitte mit einer umlaufenden Nut 6 versehen, der an der Innenfläche 7 der Achsaufnahme 4 ein komplementäres Rastmittel, ausgebildet als umlaufende Feder 8, zugeordnet ist.

Beim Einfügen der Achse 5 in die Achsaufnahme 4 greift in der Deckungslage die umlaufene Feder 8 rastend in die Nut 6 ein, wodurch die Achse 5 auszugssicher, aber weiterhin drehbar arretiert wird.

Gegenüber der in Fig. 1 dargestellten umlaufenden Feder 8 sind gemäß Fig. 2 an der Innenfläche 7 der Achsaufnahme 4 umfangsverteilt Federteilabschnitte 9 bis 12 ausgebildet. Die einzelnen Federteilabschnitte 9 bis 12 besitzen im Vergleich zur umlaufenden Feder aufgrund der Entkopplung voneinander eine erhöhte Dehnungsfähigkeit, wodurch eine bessere Anpassung der Einrastkräfte bei der Arretierung der Achse 5 über die Nut 6 erreicht wird.

Weiterhin ist im Anbindungsbereich zwischen der umlaufenden Feder 8 bzw. den Federteilabschnitten 9 bis 12 und der Innenfläche 7 der Achsaufnahme 4 ein Radius 13 ausgebildet. Durch entsprechend zunehmende oder abnehmende Gestaltung des Radius 13 läßt sich die Rastkraft der Feder 8 bzw. der Federteilabschnitte 9 bis 12, mit der diese in die Nut 6 eingreifen, beeinflussen.

Um die Elastizität bzw. Dehnbarkeit der Achsaufnahme 4 beim Einfügen der Achse 5, insbesondere im Bereich der vorkragenden Feder 8 bzw. der Federteilabschnitte 9 bis 12, zu begünstigen, sind im Verbindungsbereich der Achsaufnahme 4 mit dem Rollenkern 2 umfangsverteilt kraftabsorbierende Fenster 14 eingebracht.

## Patentansprüche

1. Rolle (1), insbesondere aus Kunststoff, die in einer Achsaufnahme (4) eine Achse (5) aufweist, deren Achsenden in Rollenbahnleisten lagern, und mit einer umlaufenden Nut (6) ausgebildet ist, der an der Innenfläche (7) der Achsaufnahme (4) ein komplementäres Feder-Rastmittel (8) zugeordnet ist,
**dadurch gekennzeichnet,**
**daß** die Feder (8) in Federteilabschnitte (9, 10, 11 12) unterteilt ist.

2. Rolle nach Anspruch 1,
**dadurch gekennzeichnet,**
**daß** im Anbindungsbereich zwischen der Feder (8) bzw. den Federteilabschnitten (9, 10, 11, 12) und der Innenfläche (7) der Achsaufnahme (4) eine Anlaufschräge oder ein Radius (13) ausgebildet ist.

3. Rolle nach Anspruch 1 oder 2,
**dadurch gekennzeichnet,**
**daß** das Höhenmaß der umlaufenden Feder (8) bzw. der Federteilabschnitte (9, 10, 11, 12) frei wählbar ist.

4. Rolle nach einem der Ansprüche 1 bis 3,
**dadurch gekennzeichnet,**
**daß** im Verbindungsbereich der Achsaufnahme (4) mit dem Rollenkem (2) umfangsverteilt Fenster (14) eingebracht sind.

## Claims

1. A roller (1), especially made of plastic, which has an axle (5) in an axle receptacle (4), whose axle ends are supported in roller track strips, and which is constructed with a circumferential groove (6) which is associated with a complementary spring locating means (8) on the inner surface (7) of the axle receptacle (4),
**characterised in**
**that** the spring (8) is subdivided into spring part sections (9, 10, 11, 12).

2. The roller according to claim 1,
**characterised in**
**that** in the connecting region between the spring (8) or the spring part sections (9, 10, 11, 12) and the inner surface (7) of the axle receptacle (4), a run-in slope or a radius (13) is constructed.

3. The roller according to claim 1 or claim 2,
**characterised in**
**that** the height dimension of the circumferential spring (8) or the spring part sections (9, 10, 11, 12) can be freely selected.

4. The roller according to any one of claims 1 to 3,
**characterised in**
**that** windows (14) distributed around the circumference are incorporated in the connecting region of the axle receptacle (4) with the roller core (2).

## Revendications

1. Rouleau (1), notamment en matière plastique, qui dans un logement d'axe (4) est muni d'un axe (5), dont les extrémités d'axe sont logées dans des baguettes de guidage et qui est conçu avec une rainure périphérique (6) auquel un moyen d'enclenchement complémentaire par ressort (8) est associé sur la face interne (7) du logement d'axe (4),
**caractérisé en ce que**
le ressort (8) est divisé en segments partiels (9,10, 11, 12) d'un ressort.

2. Rouleau selon la revendication 1,
**caractérisé en ce**
**qu'**une inclinaison de démarrage ou un rayon (13) est conçu dans la zone de rattachement entre le ressort (8) ou les segments partiels du ressort (9, 10, 11, 12) et la surface interne (7) du logement d'axe (4).

3. Rouleau selon l'une quelconque des revendications 1 ou 2,
**caractérisé en ce que**
la dimension en hauteur du ressort périphérique (8) ou des segments partiels du ressort (9, 10, 11, 12) peut être librement choisie.

4. Rouleau selon l'une quelconque des revendications 1 à 3,
**caractérisé en ce que**
des fenêtres (14) réparties sur la périphérie sont ménagées dans la zone de liaison entre le logement d'axe (4) et le noyau du rouleau (2).
